(19) Europäisches Patentamt / European Patent Office / Office européen des brevets

(11) **EP 2 023 289 A1**

(12) **DEMANDE DE BREVET EUROPEEN**

(43) Date de publication:
**11.02.2009 Bulletin 2009/07**

(51) Int Cl.:
*G06T 7/20* (2006.01)

(21) Numéro de dépôt: **08160383.9**

(22) Date de dépôt: **15.07.2008**

| | |
|---|---|
| (84) Etats contractants désignés:<br>**AT BE BG CH CY CZ DE DK EE ES FI FR GB GR HR HU IE IS IT LI LT LU LV MC MT NL NO PL PT RO SE SI SK TR**<br>Etats d'extension désignés:<br>**AL BA MK RS**<br><br>(30) Priorité: **16.07.2007 FR 0756519** | (71) Demandeur: **Commissariat à l'Energie Atomique**<br>**75015 Paris (FR)**<br><br>(72) Inventeur: **Verdant, Arnaud**<br>**38110 La Tour du Pin (FR)**<br><br>(74) Mandataire: **Ilgart, Jean-Christophe**<br>**BREVALEX**<br>**3, rue du Docteur Lancereaux**<br>**75008 Paris (FR)** |

(54) **Procédé et dispositif de détection de mouvement à double filtrage adaptatif**

(57) Procédé de détection de mouvement comportant les étapes suivantes :
- calcul d'une première moyenne $M1_n$ d'un signal $S_n$ destiné à être délivré par un pixel et correspondant à une n-ième image capturée, en fonction de la valeur du signal $S_n$ et/ou d'une valeur précédente $M1_{n-1}$ ;
- calcul d'une seconde moyenne $M2_n$ du signal $S_n$ en fonction d'une valeur précédente $M2_{n-1}$ et/ou de la valeur du signal $S_n$ ;
- calcul d'un signal $\Delta_n = |M1_n - M2_n|$ ;
- calcul d'une troisième moyenne $M3_n$ du signal $\Delta_n$ ou $k.\Delta_n$ en fonction d'une valeur précédentes $M3_{n-1}$ et/ou de la valeur du signal $\Delta_n$ ;
- comparaison entre les signaux $\Delta_n$ et $k.M3_n$ ou $\Delta_n$ et $M3_n$, un mouvement étant considéré comme détecté lorsque $\Delta_n > k.M3_n$ ou $\Delta_n > M3_n$.

FIG. 2

EP 2 023 289 A1

**Description**

## DOMAINE TECHNIQUE

L'invention concerne le domaine de la détection de mouvement et plus particulièrement celui des capteurs d'images, tels que des imageurs CMOS utilisés dans le domaine du visible ou de l'infrarouge, dans lesquels un procédé de détection de mouvement est mis en oeuvre.

## ÉTAT DE LA TECHNIQUE ANTÉRIEURE

Réaliser une détection de mouvement consiste à détecter le déplacement d'éléments mobiles par rapport à des éléments fixes dans un champ d'images capturées. Ces éléments peuvent être par exemple des véhicules ou encore des personnes. Une telle détection de mouvement consiste à isoler, parmi les signaux délivrés par un capteur d'images, ceux relatifs aux éléments mobiles, par exemple en détectant des variations significatives sur la moyenne ou la variance d'un signal d'un pixel ou d'un groupe de pixels indiquant un changement de la nature de l'élément capturé au niveau de ce pixel ou de ce groupe de pixels, par rapport à ceux relatifs aux éléments fixes dont la moyenne ou la variance reste par exemple sensiblement constante dans le temps. Pour cela, des procédés ou algorithmes de détection sont utilisés.

Une première approche consiste à utiliser un algorithme « à moyenne récursive » pour réaliser une telle détection de mouvement. Cet algorithme est basé sur un calcul d'estimation du fond, c'est-à-dire des éléments fixes se trouvant sur toutes les images capturées. Soit $X_n$ le fond, ou la moyenne, correspondant à une image n, $S_n$ le signal correspondant à l'image n acquise et $1/N$ un coefficient de pondération, on a alors :

$$X_n = X_{n-1} - \frac{1}{N} X_{n-1} + \frac{1}{N} S_n$$

On réalise ensuite une comparaison entre une valeur seuil $T_h$ choisie et $|S_n - X_n|$. Si la valeur obtenue est positive, cela signifie qu'un mouvement a été détecté. $X_n$ et $S_n$ peuvent être des variables obtenues à partir d'un signal délivré par un pixel ou en considérant plusieurs signaux délivrés par plusieurs pixels, par exemple un groupe de pixels disposés les uns à côté des autres et formant un macropixel, comme un seul signal, en prenant par exemple la moyenne de ces signaux.

Un tel algorithme a notamment pour inconvénient un manque de robustesse au niveau de la détection car le seuil de détection $T_h$ est déterminé à priori, avant la mise en oeuvre de l'algorithme, et est global à l'ensemble des pixels de la matrice. Cet inconvénient se traduit par une faible précision de la localisation des mouvements sur les images capturées. Le filtrage de type passe-bas réalisé par cet algorithme induit un déphasage, et donc un retard de la réponse par rapport au signal. Ce retard se traduit par un effet de traînée survenant en aval du passage d'un élément mobile.

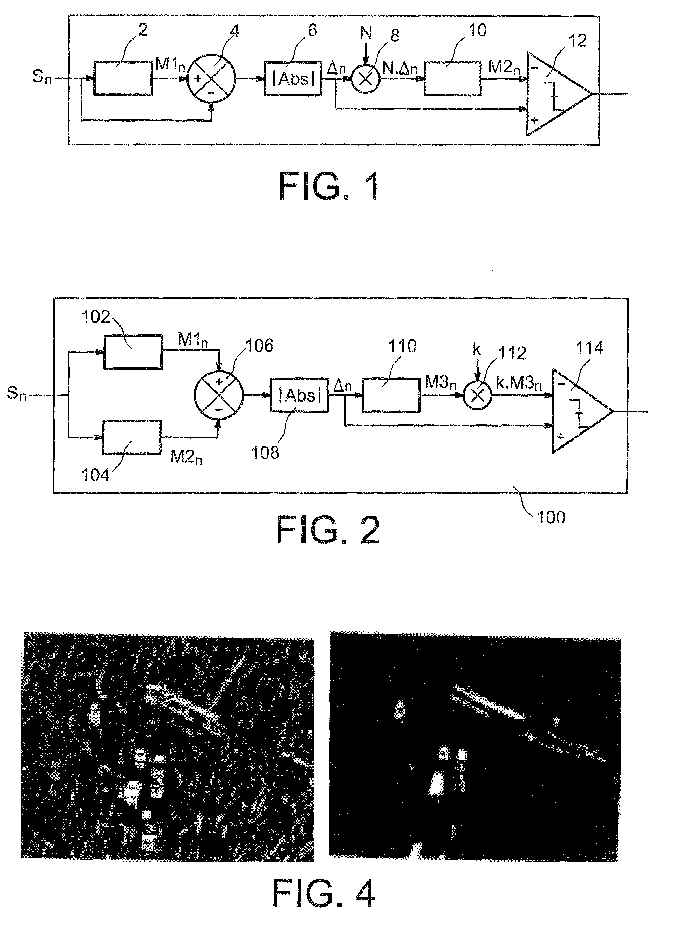

Une seconde approche consiste à utiliser un algorithme appelé sigma-delta pour réaliser une détection de mouvement. Cet algorithme permet la détection de variations significatives du signal par le biais du calcul de deux variables assimilables à la valeur moyenne et la variance du signal. La figure 1 est une représentation schématique d'un dispositif de détection de mouvement mettant en oeuvre un algorithme sigma-delta.

On calcule tout d'abord la moyenne sigma-delta $M1_n$ avec une valeur d'incrémentation et de décrémentation constante, par exemple 1, du signal $S_n$ correspondant à l'image n acquise. Pour cela, le signal $S_n$ est envoyé en entrée de premiers moyens de calcul de moyenne sigma-delta 2. Ces moyens 2 réalisent tout d'abord l'initialisation $M1_0 = S_0$. Pour les images suivantes, c'est-à-dire pour n > 0, ces moyens 2 comparent $M1_{n-1}$ et $S_n$. Si $M1_{n-1} < S_n$, on incrémente alors la valeur de $M1_{n-1}$ tel que $M1_n = M1_{n-1} + 1$. Si $M1_{n-1} > S_n$, on décrémente alors la valeur de $M1_{n-1}$ tel que $M1_n = M1_{n-1} - 1$. On calcule alors la valeur du signal $\Delta_n = |M1_n - S_n|$ par un soustracteur 4 et des moyens de calcul de valeur absolue 6. On réalise ensuite le calcul de $N \times \Delta_n$ par le multiplicateur 8, N étant une constante correspondant au seuil adaptatif de l'algorithme dont la valeur est choisie en fonction de la complexité de la scène. On réalise ensuite le calcul d'une moyenne sigma-delta $M2_n$ de $N.\Delta_n$ qui est envoyé en entrée de seconds moyens de calcul de moyenne sigma-delta 10. On réalise donc tout d'abord l'initialisation $M2_0 = 0$. Pour les images suivantes, c'est-à-dire pour n > 0, on compare $M2_{n-1}$ et $N. \Delta_n$. Si $M2_{n-1} < N. \Delta_n$, on incrémente alors la valeur de $M2_{n-1}$ tel que $M2_n = M2_{n-1} + 1$. Si $M2_{n-1} > N. \Delta_n$, on décrémente alors la valeur de $M2_{n-1}$ tel que $M2_n = M2_{n-1} - 1$. On réalise enfin une comparaison par un comparateur 12 entre le signal $\Delta_n$ et $M2_n$. Si $M2_n < \Delta_n$, cela signifie qu'un mouvement a été détecté.

Comme pour l'algorithme à moyenne récursive, les variables $S_n$, $M1_n$, $\Delta_n$ et $M2_n$ peuvent être obtenues à partir d'un signal délivré par un pixel ou en considérant plusieurs signaux délivrés par plusieurs pixels, par exemple un groupe de pixels disposés les uns à côté des autres, comme un seul signal, en prenant par exemple la moyenne de ces signaux.

Toutefois, un tel algorithme a notamment pour inconvénient de ne pas filtrer les mouvements parasites hautes fréquences qui sont alors considérés comme des mouvements à détecter (par exemple, un mouvement de feuilles d'arbre ou de la neige qui tombe). De plus, la constante N utilisée doit être déterminée à priori, ce qui réduit l'adaptabilité de la détection réalisée par cet algorithme.

## EXPOSÉ DE L'INVENTION

Un but de la présente invention est donc de proposer un procédé de détection de mouvement permettant de réduire ou supprimer la détection des mouvements parasites hautes fréquences et offrant une détection plus efficace, par exemple en terme de précision de localisation des mouvements, par rapport aux procédés de l'art antérieur, et réduisant ou supprimant l'effet de « traînée » obtenu par les procédés de l'art antérieur.

Un autre but de la présente invention est également de proposer un procédé de détection de mouvement nécessitant peu de ressources matérielles de calcul et de mémoire pour être mis en oeuvre, et pouvant être implanté de manière analogique dans un imageur très basse consommation (ayant par exemple une consommation moyenne égale à environ quelques centaines de $\mu W$).

Pour cela, la présente invention propose un procédé de détection de mouvement comportant au moins les étapes suivantes :

- calcul d'une première moyenne $M1_n$ d'un signal $S_n$ destiné à être délivré par au moins un pixel d'une matrice de pixels et correspondant à une n-ième image capturée, en fonction de la valeur du signal $S_n$ et/ou d'une valeur précédente $M1_{n-1}$ ;
- calcul d'une seconde moyenne $M2_n$ du signal $S_n$ en fonction d'une valeur précédente $M2_{n-1}$ et/ou de la valeur du signal $S_n$;
- calcul d'un signal $\Delta_n = | M1_n - M2_n |$ ;
- calcul d'une troisième moyenne $M3_n$ du signal $\Delta_n$ ou $k. \Delta_n$ en fonction d'une valeur précédentes $M3_{n-1}$ et/ou de la valeur du signal $\Delta_n$ ;
- comparaison entre les signaux $\Delta_n$ et $k.M3_n$ lorsque $M3_n$ est la troisième moyenne du signal $\Delta_n$, un mouvement étant considéré comme détecté lorsque $A_n > k.M3_n$, ou comparaison entre les signaux $\Delta_n$ et $M3_n$ lorsque $M3_n$ est la troisième moyenne du signal $k.\Delta_n$, un mouvement étant considéré comme détecté lorsque $\Delta_n > M3_n$ ;

avec k : nombre réel positif non nul, et
n : nombre entier naturel.

Par le biais d'un double filtrage adaptatif, réalisé par le calcul adaptatif de deux moyennes, l'une étant destinée à réaliser une estimation du fond et l'autre à détecter les variations dans les images capturées, on peut générer un filtrage passe bande éliminant les mouvements parasites hautes fréquences, par exemple de la neige qui tombe, qui constituent un bruit et donc un mouvement à ne pas détecter. Ce filtrage passe bande permet également d'éliminer les fonds statiques. Le calcul de la différence des deux moyennes $M1_n$ et $M2_n$ permet de ne prendre en compte que les objets dont la vitesse de déplacement est comprise entre ces deux moyennes.

On améliore également l'adaptabilité de la détection en supprimant certaines constantes devant être déterminée à priori dans les procédés de l'art antérieur. On adapte également la sensibilité de la détection à l'activité des pixels, et cela de manière locale, c'est-à-dire individuellement pour chaque pixel.

La seconde moyenne $M2_n$ peut être obtenue à partir de l'équation suivante :

$$M2_n = M2_{n-1} - \frac{1}{N_2} M2_{n-1} + \frac{1}{N_2} S_n,$$

avec $M2_{-1} = 0$, et

$1/N_2$: nombre réel positif non nul.

En choisissant une valeur appropriée de $1/N_2$, on peut choisir la constante de temps du calcul de cette seconde moyenne, qui peut être rapide pour détecter les variations enregistrées durant la détection de mouvement.

La première moyenne $M1_n$ peut être obtenue à partir de l'équation suivante :

$$M1_n = M1_{n-1} - \frac{1}{N_1} M1_{n-1} + \frac{1}{N_1} S_n,$$

avec $M1_{-1} = 0$, et

$1/N_1$: nombre réel positif non nul.

De manière analogue au choix de la valeur de $1/N_2$, le choix de la valeur de $1/N_1$ peut déterminer la constante de temps du calcul de cette première moyenne, qui peut être lente pour réaliser une estimation du fond des images capturées.

Dans une variante, la première moyenne $M1_n$ peut être obtenue au moins par les étapes de calcul suivantes :

- $M1_0 = S_0$ ;
  et pour $n > 0$ :
- $M1_n = M1_{n-1} + c_1$ lorsque $M1_{n-1} < S_n$ ;
- $M1_n = M1_{n-1} - c_1$ lorsque $M1_{n-1} > S_n$ ;
  avec $c_1$ : nombre réel positif non nul.

La valeur de la première moyenne $M1_n$ peut être supérieure à une première valeur seuil minimum non nulle $S_{M1n}$.

La valeur de la seconde moyenne $M2_n$ peut être supérieure à une seconde valeur seuil minimum non nulle $S_{M2n}$.

Lorsque $M3_n$ est la troisième moyenne du si-

gnal $\Delta_n$, $M3_n$ peut être obtenue à partir de l'équation suivante :

$$M3_n = M3_{n-1} - \frac{1}{N_3} M3_{n-1} + \frac{1}{N_3} \Delta_n ,$$

avec $M3_{-1}$, = 0, et

$1/N_3$ : nombre réel positif non nul.

Lorsque $M3_n$ est la troisième moyenne du signal $k.\Delta_n$, $M3_n$ peut être obtenue à partir de l'équation suivante :

$$M3_n = M3_{n-1} - \frac{1}{N_3} M3_{n-1} + \frac{1}{N_3} k.\Delta_n ,$$

avec $M3_{-1} = 0$, et

$1/N_3$ : nombre réel positif non nul.

Dans une variante, lorsque $M3_n$ est la troisième moyenne du signal $\Delta_n$, $M3_n$ peut être obtenue au moins par les étapes de calcul suivantes :

- $M3_0 = \Delta_0$ ;
  et pour $n > 0$ :
- $M3_n = M3_{n-1} + c_3$ lorsque $M3_{n-1} < \Delta_n$ ;
- $M3_n = M3_{n-1} - c_3$ lorsque $M3_{n-1} > \Delta_n$ ;
  avec $c_3$ : nombre réel positif non nul.

Lorsque $M3_n$ est la troisième moyenne du signal $k.\Delta_n$, $M3_n$ peut être obtenue au moins par les étapes de calcul suivantes :

- $M3_0 = k. \Delta_0$ ;
  et pour $n > 0$ :
- $M3_n = M3_{n-1} + C_3$ lorsque $M3_{n-1} < k.\Delta_n$ ;
- $M3_n = M3_{n-1} - c_3$ lorsque $M3_{n-1} > k. \Delta_n$ ;
  avec $c_3$ : nombre réel positif non nul.

La valeur de la troisième moyenne $M3_n$ peut être supérieure à une troisième valeur seuil minimum non nulle $SM_{3n}$.

Les valeurs de $S_{M1n}$ et/ou $S_{M2n}$ et/ou $S_{M3n}$ peuvent être comprises entre environ $1/250 \times$ la dynamique du signal $S_n$ et $1/25 \times$ la dynamique du signal $S_n$, et par exemple égales a environ $1/50 \times$ la dynamique du signal $S_n$, la dynamique du signal correspondant à la valeur maximale que peut prendre $|S_n|$ (par exemple égale à 256 dans le cas d'un signal codé sur 8 bits).

La valeur de k peut être comprise entre environ 1,2 et 4.

Les valeurs des coefficients de pondérations 1-N, ainsi que les valeurs des coefficients d'incrémentation et de décrémentation c dans le cas de calcul de moyenne de type sigma-delta, peuvent être calculées en fonction de la vitesse d'acquisition des images, et peuvent être aisément déterminées. La constante de temps $\tau$ d'une moyenne peut être égale au rapport : période d'échantillonnage de la capture d'images/$\ln (1 - 1/N)^{-1}$, la période d'échantillonnage correspondant à la période du signal $S_n$ (notée période $(S_n)$).

Les valeurs des coefficients de pondérations $1/N$ pouvant être utilisés dans le calcul des moyennes $M1_n$ et/ou $M2_n$ et/ou $M3_n$ peuvent être choisies telles que la constante de temps $\tau$ de la moyenne $M1_n$ soit courte, c'est-à-dire inférieure à environ 0,5 seconde (par exemple égale à 380 ms), et que les constantes de temps $\tau$ des moyennes $M2_n$ et/ou $M3_n$ soient longues, c'est-à-dire supérieures à environ 1 seconde (par exemple égales à 1,18 s), à une période d'échantillonnage de 25 Hz.

Les valeurs des coefficients d'incrémentation / décrémentation c pouvant être utilisés dans le calcul des moyennes $M1_n$ et/ou $M3_n$ peuvent être choisies et adaptées au cours du procédé afin de satisfaire la relation c < $|dS_n/dn|$. Dans une variante, lorsque les coefficients d'incrémentation / décrémentation ont une valeur fixe, par exemple égale à 1, il est possible d'adapter une période de rafraichissement Tn du procédé, c'est-à-dire la période à laquelle sont réalisées les étapes du procédé, afin que la relation c < $|\Delta S_n/Tn|$ soit vérifiée.

Les valeurs de $1/N_1$ et/ou de $1/N_2$ et/ou de $1/N_3$ peuvent être choisies telles que :

période $(S_n)/\ln(1 - 1/N_1)^{-1} < 0,5$ s ;
période $(S_n) /\ln (1 - 1/N_2)^{-1} > 1$ s ;
période $(S_n)/\ln(1 - 1/N_3)^{-1} > 1$ s ;
et/ou les valeurs de $c_1$ et/ou de $c_3$ peuvent vérifier la relation :
c < $|dS_n/d_n|$.

L'étape de calcul de la troisième moyenne $M3_n$ peut être mise en oeuvre lorsque $\Delta_n$ a une valeur non nulle.

La présente invention concerne également un dispositif de détection de mouvement comportant au moins:

- des moyens de calcul d'une première moyenne $M1_n$ d'un signal $S_n$ destiné à être délivré par au moins un pixel d'une matrice de pixels et correspondant à une n-ième image capturée, en fonction de la valeur du signal $S_n$ et/ou d'une valeur précédente $M1_{n-1}$;
- des moyens de calcul d'une seconde moyenne $M2_n$ du signal $S_n$ en fonction d'une valeur précédente $M2_{n-1}$ et/ou de la valeur du signal $S_n$ ;
- des moyens de calcul d'un signal $\Delta_n = |M1_n - M2_n|$;
- des moyens de calcul d'une troisième moyenne $M3_n$ du signal $\Delta_n$ ou $k.\Delta_n$ en fonction d'une valeur précédentes $M3_{n-1}$ et/ou de la valeur du signal $\Delta_n$ ;
- des moyens de comparaison entre les signaux $\Delta_n$ et

k.M3$_n$ lorsque M3$_n$ est la troisième moyenne du signal $\Delta_n$, un mouvement étant considéré comme détecté lorsque $\Delta_n >$ k.M3$_n$, ou des moyens de comparaison entre les signaux A$_n$ et M3$_n$ lorsque M3$_n$ est la troisième moyenne du signal k.$\Delta_n$, un mouvement étant considéré comme détecté lorsque $\Delta_n >$ M3$_n$ ;

avec k : nombre réel positif non nul, et
n : nombre entier naturel.

Les moyens de calcul de la seconde moyenne M2$_n$ peuvent réaliser au moins l'opération suivante :

$$M2_n = M2_{n-1} - \frac{1}{N_2}M2_{n-1} + \frac{1}{N_2}S_n ,$$

avec M2$_{-1}$ = 0, et

1/N$_2$ : nombre réel positif non nul.

Les moyens de calcul de la seconde moyenne M2$_n$ peuvent comporter au moins deux capacités commutées reliées en parallèle l'une par rapport à l'autre, une première des deux capacités comportant une capacité $C_1 = \frac{N_2 - 1}{N_2}$ et une seconde comportant une capacité

avec 1/N$_2$ : nombre réel positif non nul. Les moyens de calcul de la première moyenne M1$_n$ peuvent réaliser au moins l'opération suivante :

$$M1_n = M1_{n-1} - \frac{1}{N_1}M1_{n-1} + \frac{1}{N_1}S_n ,$$

avec M1$_{-1}$ = 0, et

1/N$_1$ : nombre réel positif non nul.

Les moyens de calcul de la première moyenne M1$_n$ peuvent comporter au moins deux capacités commutées reliées en parallèle l'une par rapport à l'autre, une première des deux capacités comportant une capacité $C_3 = \frac{N_1 - 1}{N_1}$ et une seconde comportant une capacité $C_4 = \frac{1}{N_1} ,$

avec 1/N$_1$ : nombre réel positif non nul.

Dans une variante, les moyens de calcul de la première moyenne M1$_n$ peuvent comporter au moins :

- des moyens d'initialisation de la valeur de M1$_0$ à la valeur de S$_0$ ;
- des moyens de comparaison entre la valeur du signal M1$_{n-1}$ et la valeur du signal S$_n$ ;
- des moyens d'incrémentation et de décrémentation de la valeur de M1$_n$ par une constante c$_1$, avec c$_1$ : nombre réel positif non nul.

Lorsque M3$_n$ est la troisième moyenne du signal $\Delta_n$, les moyens de calcul de la troisième moyenne M3$_n$ peuvent réaliser au moins l'opération suivante :

$$M3_n = M3_{n-1} - \frac{1}{N_3}M3_{n-1} + \frac{1}{N_3}\Delta_n ,$$

avec M3$_{-1}$ = 0, et

1/N$_3$ : nombre réel positif non nul.

Lorsque M3$_n$ est la troisième moyenne du signal k.$\Delta_n$, les moyens de calcul de la troisième moyenne M3$_n$ peuvent réaliser au moins l'opération suivante :

$$M3_n = M3_{n-1} - \frac{1}{N_3}M3_{n-1} + \frac{1}{N_3}k.\Delta_n ,$$

avec M3$_{-1}$ = 0, et

1/N$_3$ : nombre réel positif non nul.

Les moyens de calcul de la troisième moyenne M3$_n$ peuvent comporter au moins deux capacités commutées reliées en parallèle l'une par rapport à l'autre, une première des deux capacités comportant une capacité $C_5 = \frac{N_3 - 1}{N_3}$ et une seconde comportant une capacité $C_6 = \frac{1}{N_3} ,$

avec 1/N$_3$ : nombre réel positif non nul.

Dans une variante, lorsque M3$_n$ est la troisième moyenne du signal $\Delta_n$, les moyens de calcul de la troisième moyenne M3$_n$ peuvent comporter au moins :

- des moyens d'initialisation de la valeur de $M3_0$ à la valeur de $\Delta_0$ ;
- des moyens de comparaison entre la valeur du signal $M3_{n-1}$ et la valeur du signal $\Delta_n$ ;
- des moyens d'incrémentation et de décrémentation de la valeur de $M3_n$ par une constante $c_3$, avec $c_3$ : nombre réel positif non nul.

Lorsque $M3_n$ est la troisième moyenne du signal $k.\Delta_n$, les moyens de calcul de la troisième moyenne $M3_n$ peuvent comporter au moins :

- des moyens d'initialisation de la valeur de $M3_0$ à la valeur de $k.\Delta_0$ ;
- des moyens de comparaison entre la valeur du signal $M3_{n-1}$ et la valeur du signal $k.\Delta_n$ ;
- des moyens d'incrémentation / décrémentation de la valeur de $M3_n$ par une constante $c_3$, avec $C_3$ : nombre réel positif non nul.

Les moyens de comparaison peuvent comporter au moins un amplificateur opérationnel, ou amplificateur de transconductance.

Enfin, la présente invention concerne aussi un dispositif de capture d'images comportant au moins une matrice de pixels et un dispositif de détection de mouvement tel que décrit précédemment.

## BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :

- la figure 1 représente schématiquement un dispositif de détection de mouvement à algorithme sigma-delta,
- la figure 2 représente schématiquement un dispositif de détection de mouvement à double filtrage adaptatif, objet de la présente invention,
- la figure 3 représente des signaux obtenus lors de la mise en oeuvre d'un procédé de détection de mouvement à double filtrage adaptatif, objet de la présente invention,
- la figure 4 représente des images de mouvements détectés obtenus par un procédé de détection de mouvements à algorithme sigma-delta et par un procédé de détection de mouvement à double filtrage adaptatif, objet de la présente invention,
- la figure 5 représente une partie d'un dispositif de capture d'images comportant un exemple de dispositif de détection de mouvements à double filtrage adaptatif, objet de la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

## EXPOSÉ DÉTAILLÉ DE MODES DE RÉALISATION PARTICULIERS

Un dispositif 100 et un procédé de détection de mouvement à double filtrage adaptatif, mettant en oeuvre un algorithme RAE (« Recursive Average and Estimator » en anglais, ou moyenne récursive avec estimateur), selon un mode de réalisation particulier vont maintenant être décrits en liaison avec la figure 2.

Une première étape de ce procédé est de réaliser une estimation du fond des images sur lesquelles on souhaite détecter un mouvement, le fond étant formé par les éléments fixes se trouvant sur les images capturées. Pour cela, on calcule tout d'abord, par des moyens 102, une première moyenne $M1_n$ récursive avec un coefficient de pondération $1/N_1$ important d'un signal $S_n$ correspondant au signal délivré par un pixel, ou un groupe de pixels également appelé macropixel, d'une n-ième image acquise. On a :

$$M1_n = M1_{n-1} - \frac{1}{N_1}M1_{n-1} + \frac{1}{N_1}S_n$$

Dans ce calcul de la première moyenne $M1_n$, le choix de la valeur du coefficient de pondération $1/N_1$ est important afin de ne conserver que les éléments fixes se trouvant sur les images acquises. Pour un dispositif de capture d'images fonctionnant à 25 Hz, on choisit par exemple un coefficient de pondération tel que $N_1 = 2^4$. La valeur du coefficient de pondération $1/N_1$ est choisie en fonction de l'amplitude et la fréquence des variations du signal $S_n$.

Ainsi, la valeur $M1_n$ calculée pour un pixel ou un macropixel correspond à l'intensité lumineuse émise par l'élément fixe capturée par ce pixel ou ce macropixel, même si un ou plusieurs éléments mobiles venaient à passer temporairement devant ce pixel ou ce macropixel pendant la durée de la détection de mouvement.

Dans une variante de ce mode de réalisation, la première moyenne $M1_n$ peut ne pas être une moyenne récursive, mais une moyenne sigma-delta, par exemple à faible niveau d'incrémentation et de décrémentation $c_1$ (par exemple égal à 1), permettant également de calculer l'estimation du fond. Ce faible niveau d'incrémentation et de décrémentation correspond à une constante de temps importante dans un calcul de moyenne récursive. Pour cela, on réalise tout d'abord l'initialisation $M1_0 = S_0$.

Pour les images suivantes, c'est-à-dire pour n > 0, on compare $M1_{n-1}$ et $S_n$. Si $M1_{n-1} < S_n$, on incrémente alors la valeur de $M1_{n-1}$ tel que $M1_n = M1_{n-1} + c_1$. Si $M1_{n-1} > S_n$, on décrémente alors la valeur de $M1_{n-1}$ tel que $M1_n = M1_{n-1} - c_1$.

Par rapport à une moyenne de type récursive, une valeur moyenne de type sigma-delta a pour avantage de ne pas dépendre directement de l'amplitude des variations du signal dont on calcule la moyenne.

Parallèlement à ce calcul de cette première moyenne $M1_n$, de type récursive ou sigma-delta, des moyens de calcul 104 réalisent le calcul d'une seconde moyenne $M2_n$ récursive, avec un coefficient de pondération $1/N_2$ faible, du signal $S_n$. On a alors :

$$M2_n = M2_{n-1} - \frac{1}{N_2}M2_{n-1} + \frac{1}{N_2}S_n$$

En choisissant le coefficient de pondération $1/N_2$ faible, par exemple égal à $1/2^2$, on réalise un filtrage des éléments parasites hautes-fréquences (par exemple des feuilles d'arbres en mouvement ou des précipitations). Le coefficient de pondération $1/N_2$ est choisi en fonction de l'amplitude et la fréquence des variations du signal capturé $S_n$.

On réalise ensuite le calcul du signal $\Delta_n = |M1_n - M2_n|$ par l'intermédiaire d'un soustracteur 106 et de moyens de calcul de valeur absolue 108.

Le dispositif 100 comporte également des moyens de calcul 110 d'une troisième moyenne $M3_n$, par exemple récursive avec un coefficient de pondération $1/N_3$ important, du signal $A_n$. Cette troisième moyenne $M3_n$ récursive est obtenue par le calcul suivant :

$$M3_n = M3_{n-1} - \frac{1}{N_3}M3_{n-1} + \frac{1}{N_3}\Delta_n$$

Le coefficient de pondération $1/N_3$ est choisi en fonction de l'amplitude et la fréquence des variations du signal capturé $S_n$. On a par exemple $N_3 = 2^6$. La valeur de la fréquence de fonctionnement du dispositif de détection de mouvement intervient également dans le choix de la valeur du coefficient de pondération $1/N_3$.

Dans une variante, la troisième moyenne $M3_n$ peut ne pas être une moyenne récursive, mais une moyenne sigma-delta, par exemple avec un niveau d'incrémentation et de décrémentation constant $c_3$ (par exemple égal à 1). Pour cela, on réalise tout d'abord l'initialisation $M3_0 = \Delta_0$. Pour les images suivantes, c'est-à-dire pour n > 0, on compare $M3_{n-1}$ et $\Delta_n$. Si $M3_{n-1} < A_n$, on incrémente alors la valeur de $M3_{n-1}$ tel que $M3_n = M3_{n-1} + c_3$. Si $M3_{n-1} > A_n$, on décrémente alors la valeur de $M3_{n-1}$ tel que $M3_n = M3_{n-1} - c_3$.

Enfin, pour déterminer la présence ou non de mouvements sur l'image n capturée, le dispositif 100 comporte un comparateur 114 réalisant une comparaison entre le signal $\Delta_n$ et le produit de la troisième moyenne $M3_n$ par une constante d'amplification k obtenu en sortie d'un multiplicateur 112. La valeur de k est choisie en fonction de la fréquence de fonctionnement du dispositif de capture d'images réalisant la capture des images traitées. Par exemple, k peut avoir une valeur comprise entre environ 1,2 et 4, ou par exemple comprise entre environ 1,5 et 2,5 pour un dispositif de capture d'images fonctionnant à 25 Hz. Si $\Delta_n > k.M3_n$, cela signifie qu'un mouvement a été détecté sur les images capturées.

Dans une autre variante, $M3_n$ peut correspondre à la moyenne du produit du signal $\Delta_n$ par la constante d'amplification k. Dans le cas d'une troisième moyenne $M3_n$ récursive, celle-ci peut alors être obtenue par le calcul suivant :

$$M3_n = M3_{n-1} - \frac{1}{N_3}M3_{n-1} + \frac{1}{N_3}k.\Delta_n$$

Dans le cas d'une troisième moyenne $M3_n$ de type sigma-delta, on réalise alors l'initialisation $M3_0 = k.\Delta_0$. Pour les images suivantes, c'est-à-dire pour n > 0, on compare $M3_{n-1}$ et $k.\Delta_n$. Si $M3_{n-1} < k.\Delta_n$, on incrémente alors la valeur de $M3_{n-1}$ tel que $M3_n = M3_{n-1} + c_3$. Si $M3_{n-1} > k.\Delta_n$, on décrémente alors la valeur de $M3_{n-1}$ tel que $M3_n = M3_{n-1} - c_3$.

Enfin, lorsque $M3_n$ est la moyenne de $k.\Delta_n$, le comparateur 114 réalise une comparaison entre le signal $\Delta_n$ et la troisième moyenne $M3_n$. Si $\Delta_n > M3_n$, cela signifie qu'un mouvement a été détecté sur les images capturées.

Sur le schéma de la figure 2, cette variante où $M3_n$ correspond à la moyenne du produit du signal $A_n$ par la constante d'amplification k se traduit par une disposition du multiplicateur 112 entre les moyens de calcul 110 et les moyens de calcul de la valeur absolue 108, le multiplicateur 112 recevant alors en entrées les signaux $\Delta_n$ et k, et délivrant alors le signal $k.\Delta_n$ sur l'entrée des moyens de calcul 110.

Ce procédé est basé sur la génération de deux moyennes adaptatives, c'est-à-dire une première moyenne récursive ou sigma-delta et une seconde moyenne récursive, ayant leurs propres coefficients de pondération $1/N_1$ (ou $c_1$ dans le cas d'une première moyenne de type sigma-delta) et $1/N_2$, réalisant respectivement une estimation du fond et un filtrage des mouvements parasites hautes fréquences. Le seuillage des variations détectées est donc adaptatif puisque l'on réalise une amplification de la troisième moyenne $M3_n$ de la différence absolue des deux premières moyennes précédentes $M1_n$ et $M2_n$.

De manière générale, les valeurs d'incrémentation et de décrémentation $c_1$ et/ou $c_3$ et/ou les coeffi-

cients de pondération $1/N_1$, $1/N_2$ et $1/N_3$ utilisés dans les calculs de moyennes sont adaptés en fonction de la résolution des pixels des images capturées, c'est-à-dire du nombre de niveau de gris sur lequel est codé le signal traité, ainsi que de la fréquence de fonctionnement du dispositif de détection de mouvement 100.

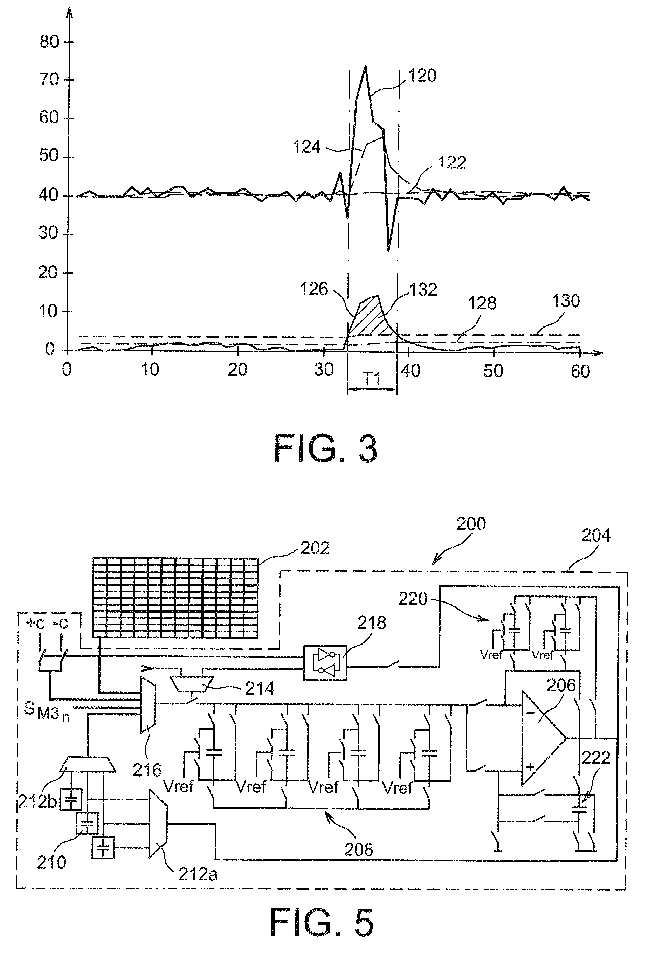

La figure 3 représente un exemple d'un signal $S_n$ issu de plusieurs images capturées par une matrice de pixels ainsi que les différents signaux calculés au cours d'un procédé de détection de mouvement à double filtrage adaptatif décrit précédemment.

Sur cette figure 3, l'axe des abscisses représente l'évolution des signaux, gradué en nombre d'images capturées, et l'axe des ordonnées représente la valeur de ces signaux, gradué en niveaux de gris. La courbe 120 représente le signal $S_n$ obtenu en sortie d'un pixel ou d'un macropixel. C'est ce signal qui est envoyé en entrée du dispositif 100. La courbe 122 représente la première moyenne $M1_n$, ici récursive, obtenue en sortie des moyens de calcul 102. Cette première moyenne $M1_n$ représente le fond de l'image capturée, c'est-à-dire le ou les éléments fixes capturés par le pixel ou le groupe de pixels. Sur la figure 3, on voit que cette première moyenne $M1_n$ varie peu, ce qui correspond effectivement à la valeur des éléments fixes capturés. La courbe 124 représente la seconde moyenne $M2_n$ obtenue en sortie des moyens de calcul 104. On voit sur la figure 3 que cette seconde moyenne $M2_n$ suit les variations les plus significatives du signal de sortie $S_n$ selon la courbe 120, réalisant bien une estimation des variations, c'est-à-dire des éléments mobiles se trouvant sur les images capturées. Enfin, les courbes 126, 128 et 130 représentent respectivement les signaux $\Delta_n$, $M3_n$ et $k.M3_n$. Dans cet exemple de réalisation, la constante d'amplification k est égale à 2. Sur la figure 3, on voit que la partie hachurée 132 correspond à une période de temps T1 pendant laquelle $\Delta_n > k.M3_n$, c'est-à-dire pendant laquelle un mouvement est détecté. On voit sur cette figure 3 qu'un mouvement est détecté pendant la période de temps T1 pendant laquelle le signal de la courbe 2 varie le plus, c'est-à-dire captant un mouvement important. Ainsi, en choisissant correctement la valeur du coefficient de pondération pour le calcul de la seconde moyenne $M2_n$, les mouvements parasites hautes fréquences correspondant aux faibles variations enregistrées par le dispositif de capture d'images ne sont pas considérés comme des mouvements détectés.

Il est possible d'imposer une valeur seuil minimum $S_{M3n}$ en dessous de laquelle il n'est pas permis que la valeur de cette moyenne $M3_n$ descende. Par exemple, dans ce mode de réalisation, la valeur de $S_{N3n}$ peut être égale à environ $1/50 \times$ la dynamique du signal $S_n$.

La figure 4 représente des résultats obtenus par la mise en oeuvre d'une détection de mouvement à algorithme sigma-delta selon l'art antérieur (image de gauche) et d'une détection de mouvement par un procédé de détection de mouvement à double filtrage adaptatif tel que décrit précédemment (image de droite). Sur ces deux images, les zones claires représentent les objets en mouvement détectés. Sur l'image de gauche, on voit que l'algorithme sigma-delta a bien permis de détecter des véhicules en mouvement, mais a également considérés des précipitations (ici des chutes de neige) comme des mouvements à détecter. Sur l'image de droite, on voit que le procédé de détection à double filtrage adaptatif a bien considéré les véhicules en mouvement et a correctement considéré les chutes de neiges comme des mouvements parasites hautes fréquences à ne pas prendre en compte.

Un exemple de dispositif de capture d'image 200, ou imageur optique, permettant de mettre en oeuvre un procédé de détection de mouvement à double filtrage adaptatif décrit précédemment est représenté sur la figure 5.

Le dispositif de capture d'images 200 comporte une matrice de pixels 202 et un dispositif de détection de mouvements 204. Chaque pixel de la matrice 202 est ici formé par une photodiode et des transistors d'adressage et de lecture. Le procédé de détection de mouvement à double filtrage adaptatif décrit précédemment peut s'appliquer au signal $S_n$ délivré par un pixel, en reliant un dispositif de détection de mouvement similaire au dispositif 204 à chaque colonne de pixels de la matrice 202. Il est également possible que le procédé de détection de mouvement s'applique à un signal $S_n$ correspondant aux signaux délivrés par plusieurs pixels, par exemple la moyenne de ces signaux. Ainsi, en considérant des macropixels, il est possible de faire travailler le dispositif de capture d'images 200 avec des zones sous-résolues, et de ne détailler ces zones en mettant en oeuvre un procédé de détection de mouvements à double filtrage adaptatif pour chaque pixel d'un macropixel que lorsqu'un mouvement a été détecté au niveau de ce macropixel. Il est alors possible de réduire le nombre de dispositif de détection de mouvement 204 utilisés dans le dispositif de capture d'images 200 en ne faisant appel qu'à un seul dispositif de détection de mouvements 204 par colonne de macropixels. Un macropixel peut par exemple être un carré de $12 \times 12$ pixels, ou encore d'une toute autre valeur, par exemple $4 \times 4$ pixels comme sur la figure 5. Les valeurs de chaque macropixel, de la matrice 202 sont lues ligne par ligne.

Le dispositif de détection de mouvements 204 représenté sur la figure 5 comporte un comparateur 206, par exemple un amplificateur opérationnel (ou amplificateur de transconductance), une pluralité de capacités commutées 208, des registres mémoires analogiques 210 (trois registres mémoires 210 sont représentés sur la figure 5 mais le dispositif de détection de mouvement 204 peut comporter un nombre différent de registres mémoires adapté au nombre de valeurs à stocker pendant la mise en oeuvre du procédé de détection de mouvement), un démultiplexeur d'adressage 212a, un multiplexeur d'adressage 212b, un multiplexeur 214 de commande d'écriture dans les capacités commutées 208, un multiplexeur 216 apportant les valeurs à écrire dans les capacités commutées 208, une mémoire SRAM 218, des condensateurs 220 destinés à obtenir différentes valeurs d'un coefficient de multiplication k et un condensateur 222.

Le fonctionnement du dispositif de détection de mouvement 204 va maintenant être décrit en liaison avec la mise en oeuvre du procédé de détection de mouvements décrit précédemment.

Dans le cas d'une première moyenne $MI_n$ de type récursive, on délivre en entrée du multiplexeur 216, par l'intermédiaire du multiplexeur d'adressage 212b, la valeur du signal $M_{n-1}$ stockée dans un des registres mémoire 210. Lorsque n = 0, on a $M_{-1}$ = 0. On réalise ensuite le calcul de la première moyenne $M1_n$ récursive. Pour cela, le signal $M_{n-1}$ est envoyé aux bornes d'une première des capacités commutées 208 dont la valeur $C_3$ est égale à $(N_1-1)/N_1$. La valeur du signal $M_{n-1}$ est stockée aux bornes de cette capacité.

On lit ensuite le signal $S_n$ délivré par le premier macropixel de la matrice 202 en entrée du multiplexeur 216. La valeur du signal $S_n$ est stockée aux bornes d'une seconde capacité commutée dont la valeur $C_4$ est égale à $1/N_1$.

En reliant en parallèle les deux capacités commutées de valeurs $C_3$ et $C_4$, on obtient bien le signal

$$M1_n = M1_{n-1} - \frac{1}{N_1}M1_{n-1} + \frac{1}{N_1}S_n \quad \text{aux bornes}$$

de ces capacités.

Il est également possible que la moyenne $M1_n$ soit une moyenne sigma-delta. Pour cela, on réalise l'initialisation $M1_0 = S_0$ en stockant la valeur du signal $S_0$ dans un des registres mémoire 210. Pour les images suivantes, on compare $M1_{n-1}$ et $S_n$ en appliquant l'un des deux signaux sur l'entrée positive du comparateur 206 par l'intermédiaire du condensateur 222 dans lequel est stocké ce signal, et en appliquant l'autre des deux signaux sur l'entrée négative du comparateur 206. Le résultat obtenu en sortie du comparateur 206 permet alors de sélectionner l'une des valeurs $+c_1$ ou $-c_1$ appliquées en entrée du multiplexeur 216 (+c et -c sur la figure 5). Si $M1_{n-1} < S_n$, on incrémente alors la valeur de $M1_{n-1}$ tel que $M1_n = M1_{n-1} + c_1$. Si $M1_{n-1} > S_n$, on décrémente alors la valeur de $M1_{n-1}$ tel que $M1_n = M1_{n-1} - c_1$. Dans cet exemple de réalisation, $c_1$ = 1. L'opération d'addition de $+/-c_1$ à $M1_{n-1}$ est réalisée par l'intermédiaire des capacités 208 en stockant aux bornes de deux de ces capacités les valeurs $+/-c_1$ et $M1_{n-1}$, et en reliant ces capacités en série de manière à réaliser une addition.

Que la moyenne $M1_n$ soit de type récursive ou sigma-delta, sa valeur est stockée dans un des registres mémoire 210. Dans cet exemple de réalisation, le dispositif de détection de mouvement 204 comporte trois registres mémoire 210 destinés à stocker trois moyennes $M1_n$, $M2_n$ et $M3_n$ différentes.

De manière similaire au calcul de la première moyenne $M1_n$ lorsque celle-ci est de type récursif, on réalise le calcul de la seconde moyenne $M2_n$ récursive. Ce calcul est réalisé en utilisant un autre des registres mémoire 210 et deux autres capacités commutées du banc 208 de valeur $C_1$ et $C_2$, respectivement de valeur $(N_2-1)/N_2$ et $1/N_2$.

On réalise ensuite le calcul du signal $\Delta_n = |M1_n - M2_n|$. Cette opération peut être réalisée par l'intermédiaire des capacités commutées 208.

De manière similaire au calcul de la première moyenne $M1_n$, on réalise le calcul de la troisième moyenne $M3_n$. Comme la première moyenne $M1_n$, la troisième moyenne $M3_n$ peut être de type sigma-delta ou de type récursive. La mise en oeuvre de ce calcul est réalisée par les mêmes éléments du dispositif 204 que ceux utilisés pour le calcul de la première moyenne $M1_n$ lorsque $M1_n$ et $M3_n$ sont du même type.

On réalise alors une comparaison par l'intermédiaire de l'amplificateur 206 entre le signal $\Delta_n$ et le produit de la troisième moyenne $M3_n$ par une constante d'amplification k, dont la valeur est obtenue par le rapport entre l'une des capacités 220 et une autre des capacités commutée 208, ou entre le signal $\Delta_n$ et la troisième moyenne $M3_n$ lorsque $M3_n$ correspond la troisième moyenne du signal $k.\Delta_n$. La valeur obtenue en sortie de l'amplificateur 206 est représentative d'une détection ou non d'un mouvement au niveau du macropixel considéré. Si $\Delta_n > k.M3_n$ (ou $\Delta_n > M3_n$ lorsque $M3_n$ correspond la troisième moyenne du signal $k.\Delta_n$), alors on considère qu'un mouvement a été détecté au niveau du macropixel considéré.

L'opération est ensuite répétée pour les macropixels suivants, ligne après ligne.

Durant les calculs de la troisième moyenne $M3_n$, il est possible d'imposer une valeur seuil minimum en dessous de laquelle il n'est pas permis que la valeur de cette moyenne descende. Cette valeur seuil minimum $S_{M3n}$ peut être appliquée en entrée du multiplexeur 216. Lorsque la valeur de cette moyenne est inférieure à la valeur de ce seuil, la valeur de $M3_n$ est alors remplacée par la valeur seuil $S_{M3n}$.

Lorsqu'un mouvement est détecté au niveau d'un macropixel, il est possible, pour une image n dont la détection de mouvements a été réalisée sur des macropixels, de stocker les valeurs des macropixels dans la mémoire 218, puis, au niveau du ou des macropixels ayant enregistré des mouvements, de mettre en oeuvre le procédé de détection de mouvements décrit précédemment pour chacun des pixels du macropixel. Ainsi, il est possible de définir précisément la localisation des mouvements détectés sans traiter tous les pixels des images capturées.

On voit donc que le procédé peut être mis en oeuvre à partir de peu de ressources matérielles de calcul (un amplificateur opérationnel, plusieurs capacités commutées avec une fréquence d'horloge pour les instructions de quelques dizaines de kHz et quelques multiplexeurs / démultiplexeurs) et de mémoire (quelques registres analogiques par pixel et une mémoire SRAM par exemple).

Le dispositif représenté sur la figure 5 permet une mise en oeuvre analogique du procédé de détection de mouvement décrit précédemment. Toutefois, il est également possible de réaliser une mise en oeuvre numérique du procédé de détection de mouvements en reliant la matrice de pixels 202 à des moyens de traitement numérique du signal, par exemple un circuit de type DSP, FPGA ou un microprocesseur, dans lequel le procédé de détection de mouvements est programmé.

Les signaux obtenus en sortie des dispositifs de détection de mouvement peuvent être utilisés pour afficher une image sur laquelle le fond capturé forme un fond noir sur lequel les éléments mobiles détectés sont représentés en blanc, comme par exemple représenté sur l'image de droite de la figure 4.

### Revendications

1. Procédé de détection de mouvement comportant au moins les étapes suivantes :

   - calcul d'une première moyenne $M1_n$ d'un signal $S_n$ destiné à être délivré par au moins un pixel d'une matrice de pixels (202) et correspondant à une n-ième image capturée, en fonction de la valeur du signal $S_n$ et/ou d'une valeur précédente $M1_{n-1}$ ;
   - calcul d'une seconde moyenne $M2_n$ du signal $S_n$ en fonction d'une valeur précédente $M2_{n-1}$ et/ou de la valeur du signal $S_n$ ;
   - calcul d'un signal $\Delta_n = |M1_n - M2_n|$ ;
   - calcul d'une troisième moyenne $M3_n$ du signal $\Delta_n$ ou $k.\Delta_n$ en fonction d'une valeur précédentes $M3_{n-1}$ et/ou de la valeur du signal $\Delta_n$ ;
   - comparaison entre les signaux $\Delta_n$ et $k.M3_n$ lorsque $M3_n$ est la troisième moyenne du signal $A_n$, un mouvement étant considéré comme détecté lorsque $\Delta_n > k.M3_n$, ou comparaison entre les signaux $\Delta_n$ et $M3_n$ lorsque $M3_n$ est la troisième moyenne du signal $k.\Delta_n$, un mouvement étant considéré comme détecté lorsque $\Delta_n > M3_n$ ;

      avec k : nombre réel positif non nul, et
      n : nombre entier naturel.

2. Procédé selon la revendication 1, la seconde moyenne $M2_n$ étant obtenue à partir de l'équation suivante :

$$M2_n = M2_{n-1} - \frac{1}{N_2} M2_{n-1} + \frac{1}{N_2} S_n \, ,$$

   avec $M2_{-1} = 0$, et

   $1/N_2$ : nombre réel positif non nul.

3. Procédé selon l'une des revendications précédentes, la première moyenne $M1_n$ étant obtenue à partir de l'équation suivante :

$$M1_n = M1_{n-1} - \frac{1}{N_1} M1_{n-1} + \frac{1}{N_1} S_n \, ,$$

   avec $ML_{-1} = 0$, et

   $1/N_1$ : nombre réel positif non nul.

4. Procédé selon l'une des revendications 1 ou 2, la première moyenne $M1_n$ étant obtenue au moins par les étapes de calcul suivantes :

   - $M1_0 = S_0$ ;
   et pour n > 0 :
   - $M1_n = M1_{n-1} + c_1$ lorsque $M1_{n-1} < S_n$ ;
   - $M1_n = M1_{n-1} - c_1$ lorsque $M1_{n-1} > S_n$ ;
   avec $c_1$ : nombre réel positif non nul.

5. Procédé selon l'une des revendications précédentes, dans lequel, lorsque $M3_n$ est la troisième moyenne du signal $\Delta_n$, $M3_n$ est obtenue à partir de l'équation suivante :

$$M3_n = M3_{n-1} - \frac{1}{N_3} M3_{n-1} + \frac{1}{N_3} \Delta_n \, ,$$

   et, lorsque $M3_n$ est la troisième moyenne du signal $k.\Delta_n$, $M3_n$ est obtenue à partir de l'équation suivante :

$$M3_n = M3_{n-1} - \frac{1}{N_3} M3_{n-1} + \frac{1}{N_3} k.\Delta_n \, ,$$

   avec $M3_{-1} = 0$, et

   $1/N_3$ : nombre réel positif non nul.

6. Procédé selon l'une des revendications 1 à 4, dans lequel, lorsque $M3_n$ est la troisième moyenne du signal $\Delta_n$, $M3_n$ est obtenue au moins par les étapes de calcul suivantes :

   - $M3_0 = \Delta_0$ ;
   et pour n > 0 :
   - $M3_n = M3_{n-1} + c_3$ lorsque $M3_{n-1} < \Delta_n$ ;
   - $M3_n = M3_{n-1} - C_3$ lorsque $M_{3n-1} > \Delta_n$ ;
   et, lorsque $M3_n$ est la troisième moyenne du si-

gnal $k.\Delta_n$, $M3_n$ est obtenue au moins par les étapes de calcul suivantes :
- $M3_0 = k.\Delta_0$ ;

et pour $n > 0$ :
- $M3_n = M3_{n-1} + c_3$ lorsque $M3_{n-1} < k.\Delta_n$ ;
- $M3_n = M3_{n-1} - c_3$ lorsque $M3_{n-1} > k.\Delta_n$ ;

avec $c_3$ : nombre réel positif non nul.

**7.** Procédé selon l'une des revendications précédentes, la valeur de la troisième moyenne $M3_n$ étant supérieure à une troisième valeur seuil minimum non nulle $S_{M3n}$.

**8.** Procédé selon la revendication 7, la valeur de $S_{M3n}$ étant comprise entre environ $1/250 \times$ la dynamique du signal $S_n$ et $1/25 \times$ la dynamique du signal $S_n$.

**9.** Procédé selon l'une des revendications précédentes, la valeur de $k$ étant comprise entre environ 1,2 et 4.

**10.** Procédé selon l'une des revendications précédentes, les valeurs de $1/N_1$ et/ou de $1/N_2$ et/ou de $1/N_3$ étant choisies telles que :

période $(S_n)/\ln (1 - 1/N_1)^{-1} < 0,5$ s ;
période $(S_n) /\ln (1 - 1/N_2)^{-1} > 1$ s ;
période $(S_n)/\ln (1 - 1/N_3)^{-1} > 1$ s ;
et/ou les valeurs de $c_1$ et/ou de $c_3$ vérifient la relation :
$c < |dS_n/dn|$.

**11.** Procédé selon l'une des revendications précédentes, l'étape de calcul de la troisième moyenne $M3_n$ étant mise en oeuvre lorsque $\Delta_n$ a une valeur non nulle.

**12.** Dispositif de détection de mouvement (100, 204) comportant au moins :

- des moyens de calcul (102) d'une première moyenne $M1_n$ d'un signal $S_n$ destiné à être délivré par au moins un pixel d'une matrice de pixels (202) et correspondant à une n-ième image capturée, en fonction de la valeur du signal $S_n$ et/ou d'une valeur précédente $M1_{n-1}$;
- des moyens de calcul (104) d'une seconde moyenne $M2_n$ du signal $S_n$ en fonction d'une valeur précédente $M2_{n-1}$ et/ou de la valeur du signal $S_n$ ;
- des moyens de calcul (106, 108) d'un signal $\Delta_n = |M1_n - M2_n|$ ;
- des moyens de calcul (110) d'une troisième moyenne $M3_n$ du signal $\Delta_n$ ou $k.\Delta_n$ en fonction d'une valeur précédentes $M3_{n-1}$ et/ou de la valeur du signal $\Delta_n$ ;
- des moyens de comparaison (114, 206) entre les signaux $\Delta_n$ et $k.M3_n$ lorsque $M3_n$ est la troisième moyenne du signal $\Delta_n$, un mouvement étant considéré comme détecté lorsque $\Delta_n > k.M3_n$, ou des moyens de comparaison entre les signaux $\Delta_n$ et $M3_n$ lorsque $M3_n$ est la troisième moyenne du signal $k.\Delta_n$, un mouvement étant considéré comme détecté lorsque $\Delta_n > M3_n$ ;

avec $k$ : nombre réel positif non nul, et
$n$ : nombre entier naturel.

**13.** Dispositif (100, 204) selon la revendication 12, les moyens de calcul (104) de la seconde moyenne $M2_n$ réalisant au moins l'opération suivante :

$$M2_n = M2_{n-1} - \frac{1}{N_2}M2_{n-1} + \frac{1}{N_2}S_n ,$$

avec $M2_{-1} = 0$, et

$1/N_2$ : nombre réel positif non nul.

**14.** Dispositif (100, 204) selon l'une des revendications 12 ou 13, les moyens de calcul (104) de la première moyenne $M1_n$ réalisant au moins l'opération suivante :

$$M1_n = M1_{n-1} - \frac{1}{N_1}M1_{n-1} + \frac{1}{N_1}S_n ,$$

avec $M1_{-1} = 0$, et

$1/N_1$ : nombre réel positif non nul.

**15.** Dispositif (100, 204) selon l'une des revendications 12 ou 13, les moyens de calcul (102) de la première moyenne $M1_n$ comportant au moins :

- des moyens d'initialisation de la valeur de $M1_0$ à la valeur de $S_0$ ;
- des moyens de comparaison entre la valeur du signal $M1_{n-1}$ et la valeur du signal $S_n$ ;
- des moyens d'incrémentation / décrémentation de la valeur de $M1_n$ par une constante $c$, avec $c$ : nombre réel positif non nul.

**16.** Dispositif (100, 204) selon l'une des revendications 12 à 15, dans lequel, lorsque $M3_n$ est la troisième moyenne du signal $\Delta_n$, les moyens de calcul (110) de la troisième moyenne $M3_n$ réalisent au moins l'opération suivante :

$$M3_n = M3_{n-1} - \frac{1}{N_3}M3_{n-1} + \frac{1}{N_3}\Delta_n \;,$$

et, lorsque $M3_n$ est la troisième moyenne du signal $k.\Delta_n$, les moyens de calcul (110) de la troisième moyenne $M3_n$ réalisent au moins l'opération suivante :

$$M3_n = M3_{n-1} - \frac{1}{N_3}M3_{n-1} + \frac{1}{N_3}k.\Delta_n \;,$$

avec $M3_{-1} = 0$, et

    $1/N_3$ : nombre réel positif non nul.

**17.** Dispositif (100, 204) selon l'une des revendications 12 à 15, dans lequel, lorsque $M3_n$ est la troisième moyenne du signal $\Delta_n$, les moyens de calcul (110) de la troisième moyenne $M3_n$ comportent au moins :

    - des moyens d'initialisation de la valeur de $M3_0$ à la valeur de $\Delta_0$ ;
    - des moyens de comparaison entre la valeur du signal $M3_{n-1}$ et la valeur du signal $\Delta_n$ ;
    - des moyens d'incrémentation / décrémentation de la valeur de $M3_n$ par une constante $c_3$, avec $c_3$ : nombre réel positif non nul ;
    et, lorsque $M3_n$ est la troisième moyenne du signal $k.\Delta_n$, les moyens de calcul (110) de la troisième moyenne $M3_n$ comportent au moins :
    - des moyens d'initialisation de la valeur de $M3_0$ à la valeur de $k.\Delta_0$ ;
    - des moyens de comparaison entre la valeur du signal $M3_{n-1}$ et la valeur du signal $k.\Delta_n$ ;
    - des moyens d'incrémentation / décrémentation de la valeur de $M3_n$ par une constante $c_3$, avec $c_3$ : nombre réel positif non nul.

**18.** Dispositif de capture d'images (200) comportant au moins une matrice de pixels (202) et un dispositif de détection de mouvement (100, 204) selon l'une des revendications 12 à 17.

FIG. 1

FIG. 2

FIG. 4

13

FIG. 3

FIG. 5

Europäisches
Patentamt

European
Patent Office

Office européen
des brevets

**RAPPORT DE RECHERCHE EUROPEENNE**

Numéro de la demande

EP 08 16 0383

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | M. JULIEN RICHEFEU: "Détection et analyse du mouvement sur système de vision à base de rétine numérique" [Online] 14 décembre 2006 (2006-12-14), THESE DE DOCTORAT DE L'UNIVERSITÉ PARIS 6 , PARIS , XP002478406 Extrait de l'Internet: URL:http://pastel.paristech.org/2557/01/TheseRichefeu.pdf> [extrait le 2008-04-15] Sections 3.1, 3.2, 3.3, 3.4 et 3.6 ----- | 1-16 | INV. G06T7/20 |
| A | FREDRIK GUSTAFSSON: "Adaptive Filtering and Change Detection" 2000, JOHN WILEY & SONS, LTD , XP002478407 Part I: Introduction Part II: Signal Estimation ----- | 1-16 | |
| | | | **DOMAINES TECHNIQUES RECHERCHES (IPC)** |
| | | | G06T |

Le présent rapport a été établi pour toutes les revendications

| Lieu de la recherche | Date d'achèvement de la recherche | Examinateur |
|---|---|---|
| La Haye | 17 décembre 2008 | Almeida Garcia, B |

CATEGORIE DES DOCUMENTS CITES

X : particulièrement pertinent à lui seul
Y : particulièrement pertinent en combinaison avec un
  autre document de la même catégorie
A : arrière-plan technologique
O : divulgation non-écrite
P : document intercalaire

T : théorie ou principe à la base de l'invention
E : document de brevet antérieur, mais publié à la
  date de dépôt ou après cette date
D : cité dans la demande
L : cité pour d'autres raisons

 

& : membre de la même famille, document correspondant

EPO FORM 1503 03.82 (P04C02)